Europäisches Patentamt

European Patent Office

Office européen des brevets

(11) Publication number: **0 203 703**
**A1**

(12) **EUROPEAN PATENT APPLICATION**

(21) Application number: **86302949.2**

(22) Date of filing: **18.04.86**

(51) Int. Cl.⁴: **C 10 G 33/06**, **B 01 D 17/02**

(30) Priority: **31.05.85 GB 8513794**

(43) Date of publication of application: **03.12.86**
**Bulletin 86/49**

(84) Designated Contracting States: **AT BE CH DE FR GB IT LI LU NL SE**

(71) Applicant: **KEENE INTERNATIONAL LIMITED,**
**Unit 23 Mitcham Industrial Estate Streatham Road,**
**Mitcham Surrey CR4 2AP (GB)**

(72) Inventor: **Knight, Noel Edward, Rowans 130 Harestone**
**Valley Road, Caterham Surrey CR3 6HG (GB)**

(74) Representative: **Bayliss, Geoffrey Cyril et al, BOULT,**
**WADE & TENNANT 27 Furnival Street, London**
**EC4A 1PQ (GB)**

(54) **Fuel filter and dehydrator element and method of filtering and dehydrating fuel.**

(57) The disclosure relates to a fuel filter/dehydrator element having a coalescing layer (22) to coalesce into droplets water in fuel passing through and an absorptive layer (28) downstream of the coaslescing layer to absorb water droplets but permit fuel flow, the absorptive layer decreases in permeability as it becomes saturated with water to cut down or cut off the fuel flow. In order to provide a substantially increased impedance to the flow of water droplets in preference to the flow of fuel a hydrophobic and oleophilic layer is disposed between the coalescing and absorptive layers, a method of filtering and dehydrating fuel is also disclosed including the steps of coalescing droplets of water in a flow of fuel and absorbing in an absorptive material the water droplets in the fuel whilst resisting the flow of fuel as the absorptive material becomes saturated with water including the step of impeding the flow of water droplets to the absorptive material substantially more than flow of fuel to the absorptive material.

# FUEL FILTER AND DEHYDRATOR ELEMENT
## AND METHOD OF FILTERING AND DEHYDRATING FUEL

One aspect of this invention relates generally to a fuel filter dehydrator element, and particularly, but not exclusively, to a fuel filter dehydrator element for use with an aviation fuel supply system which automatically shuts off fuel flow upon saturation of the filter dehydrator with water.

Specifically, this invention relates to a fuel filter dehydrator element having a coalescing layer of material to coalesce into droplets water in fuel passing therethrough, and an absorptive layer of material downstream of the coalescing layer to absorb water droplets but permit fuel flow, the absorptive layer decreasing in permeability as it becomes saturated with water to cut-down or cut-off the fuel flow.

Such an element is disclosed in patent specification GB 927888 (Muller). The coalescing and absorptive layers of the element disclosed in GB 927888 are spaced apart and it is suggested in that specification that water droplets which are released by the coalescing layer gravitate down the space to a water outlet at the bottom of the annular space. It is further suggested that if separation of water and fuel is not achieved by the coalescing layer, then the water finds its way into the absorptive layer, which is a column of paper rings held under compression, where the water is absorbed and causes the rings to swell, such that eventually a point is reached at which the pressure in the column of paper rings is so high that fuel can no longer pass through the column of rings and thus the element cuts-off the fuel flow.

It is believed that in operation of the

0203703

element of GB 927888 a significant proportion of the water droplets released by the coalescing column do not gravitate to the water outlet, but rather are carried by the fuel flow across the space to the absorptive column where they are absorbed by the paper rings and thus cause the paper rings to swell. Furthermore, it is believed that the element of GB 927888 takes an unacceptably long time to react to high levels of water in the fuel and that, during the time that the element is cutting-off the flow, water is washed through the column of paper rings and passes to the fuel outlet.

Another fuel filter dehydrator element is disclosed in patent specification US 4242206 (Estabrooke). That specifiction discloses an element which uses a water dispersive layer rather than a water coalescing layer. However, the absorptive layer is porous to very small droplets of water and thus the dispersing action of the layer upstream of the absorptive layer hinders rather than helps the dehydrating action of the element.

A further fuel filter/dehydrator element is disclosed in European patent application No. 85303612.7 (a copy of the specification of which accompanies this application). In that element, a series of pairs of coalescing and absorptive layers are provided in the element. As the first absorptive layer of the series becomes saturated with water and a pressure drop builds up across it, the pressure is reacted by the downstream layers, causing the downstream coalescing layers to be compressed and exhude water into their associated absorptive layers, causing further pressure drops in the element once it has become saturated. A disadvantage with that element is that the element tends to close down earlier than is necessary.

An object of the present invention is to provide a fuel filter/dehydrator element which automatically shuts-off or provides a substantial back-pressure as it becomes saturated, but which functions for a substantially longer time than an equivalent known element before the shut-off occurs.

The element of the present invention is characterised by a hydrophobic and oleophilic layer of material disposed between the coalescing and absorptive layers, the hydrophobic/oleophilic layer providing a substantially greater impedence to the flow of water droplets than to the flow of fuel.

Thus, as water droplets are coalesced by the coalescing layer, they are hindered in their flow by the hydrophobic/oleophilic layer and a concentration of water droplets builds up upstream of the hydrophobic/oleophilic layer, for example in the coalescing layer. Fuel can, however, pass relatively freely through the hydrophobic/oleophilic layer. Once the concentration of water reaches a particular value, however, it passes through the hydophobic/oleophilic layer and is absorbed by the absorptive layer, and as the absorptrive layer becomes saturated with water the element starts to shut-off. In essence, then, the hydrophobic/oleophilic layer holds back the flow of water and defers the onset of shut-off of the element.

Preferably, a second coalescing layer is disposed between the hydrophobic/oleophilic layer and the absorptive layer. Thus water droplets which may be subdivided upon passing through the hydrophobic/oleophilic layer are re-coalesced before passing to the absorptive layer.

The element may include a further coalescing layer downstream of the absorptive layer and a further absorptive layer downstream of the further coalescing layer, thus providing accelerated shut-off of the element once shut-off commences, in the manner described in the aforementioned European patent application No. 85303612.7.

The method of filtering and dehydrating fuel according to the invention includes the steps of coalescing into droplets water in a flow of fuel, absorbing in an absorptive material the water droplets in the fuel and resisting the flow of fuel as the absorptive material becomes saturated with water, characterised by the step of impeding the flow of water droplets to the absorptive material substantially more than the flow of fuel to absorptive material.

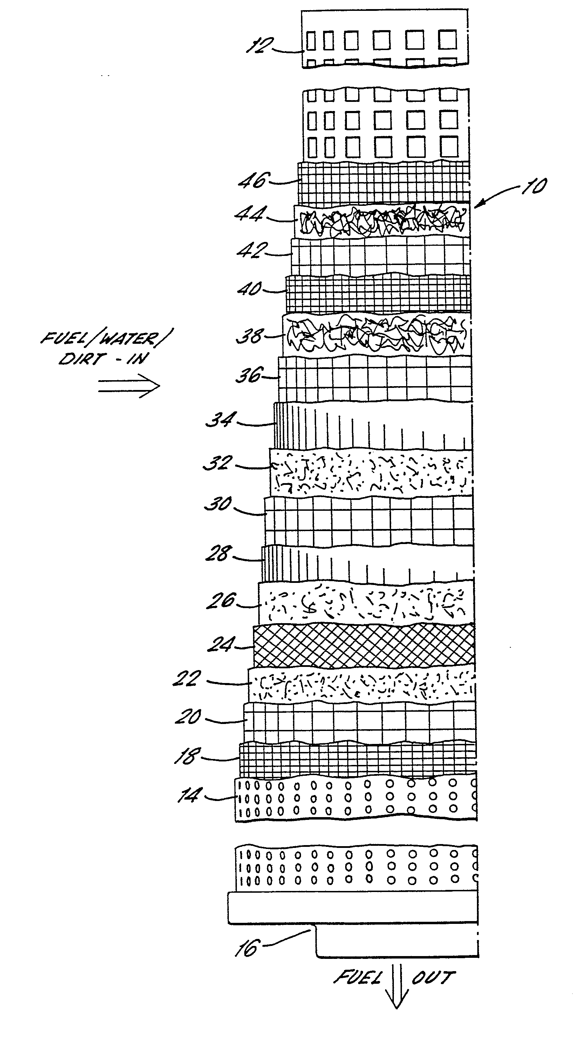

There follows a description by way of example of a specific embodiment of the present invention, reference being made to the accompanying drawing which is a partially cut away side view of a fuel filter/dehydrator element according to the present invention.

Referring to the drawing, the element 10 comprises a plurality of wound layers of material between an inner cylindrical perforated former 12 and an outer cylindrical perforated sleeve 14 with caps 16 at either end of the element one of which is shown in the drawing. The former 12, sleeve 14, caps 16 and the method of winding the layers are conventional. Fuel to be filtered and dehydrated is fed radially inwardly through the sleeve 14, whence it passes through the layers and the former 12, and then leaves the element through one of the end caps. A plurality of the elements 10 may be mounted in a common filter housing.

The layers in the element 10 consist of the following:
* 18 - an outer PVC fibreglass screen;

* 20 - a polyester scrim;
22 - a fibreglass coalescing layer;
24 - a hydrophobic/oleophilic layer;
26 - a fibreglass re-coalescing layer;
28 - a cellulose absorptive layer;
* 30 - a polyester scrim;
32 - a further fibreglass coalescing layer;
34 - a further cellulose absorptive layer;
* 36 - a polyester scrim;
* 38 - a media migration barrier;
* 40 - a media support layer;
* 42 - a polyester scrim;
* 44 - a further media migration barrier;
* 46 - a further media support layer.

The layers listed above marked with an asterisk are conventional materials used in a conventional manner, and further description thereof is unnecessary.

The coalescing layers 22, 32 and the re-coalescing layer 26 are layers of fibreglass such as that sold by Owens-Corning Fibreglass Corporation of Toledo, Ohio, U.S.A. under the decription FM-004 and may have have a mass of 50 g/m$^2$, a fibre diameter of 1 micron and a thickness of 6mm.

The absorptive layers 28, 34 are formed from sheets of cross-linked carboxymethyl cellulose fibre such as that sold by Daicell USA Inc of Los Angeles, California, U.S.A. under the designation Jelfine R-820 and may have a mass of 90g/m$^2$ and a thickness of 170 microns.

The hydrophobic/oleophilic layer 24 is formed from a sheet of spun or thermally bonded filaments of polyester or polypropylene or nylon, or of precision woven nylon filaments with a silicone finish, or from PTFE coated fabrics or metal meshes. The layers 24 may be similar to the hydrophobic/oleophilic layers conventionally used in fuel/water separators, rather than dehydrators.

In operation, fuel containing water and dirt is fed under pressure through the sleeve 14, the outer PVC fibreglass screen 18 acting to filter the dirt out the liquid. As the fuel and water passes through the coalescing layer 22, the water is coalesced into droplets. The fuel which may still contain minute droplets then passes through the hydrophobic/oleophilic layer 24, but the larger droplets are held back by the hydrophobic/oleophilic layer 24. The fuel passes through the re-coalescing layer 26 and the absorptive layer to the further coalescing layer 32 where the majority of water remaining in the fuel is coalesced into droplets. Going back to the hydrophobic/oleophilic layer, the amount of water held back by that layer increases as time goes on until a stage is reached when water droplets pass through that layer despite the hydrophobic nature of the layer. The droplets may be divided up to some extent as they pass through the hydrophobic/oleophilic layer 24 and that is the reason for providing the re-coalescing layer 26. After re-coalescing, the droplets pass to the absorptive layer 28, where they are absorbed. As the amount of water absorbed by the absorptive layer 28 increases a pressure drop occurs across the absorptive layer which impedes the flow of fuel through the element 10, and thus the element automatically starts to cut-off. The pressure drop across the layer 28 is reacted by the inner former 12, the force being transmitted _via_ the intervening layers 30 to 46 including the further coalescing layer 32. Thus, as cut-off commences, the further coalescing layer 32 is compressed and therefore water droplets are exhuded by that layer into the further absorptive layer 38. Likewise, the pressure drop across that layer 38 also increases, thus adding to the total pressure drop across the element and accentuating the cut-off effect.

Further pairs of coalescing and absorptive layers may be included in the element downstream of the layers 32, 34.

The filter system in which the element is used may rely solely on the cut-off effect of the element to prevent fuel flow once the element has become saturated with water and is in need of replacement. Alternatively, a pressure sensor may be used to detect when the pressure drop across the element has increased to a predetermined level, and a control unit may then operate a valve to close off the fuel supply to the element.

CLAIMS

1.    A fuel filter/dehydrator element having a coalescing layer (22) to coalesce into droplets water in fuel passing therethrough and an absorptive layer (28) downstream of the coalescing layer to absorb water droplets but permit fuel flow, the absorptive layer decreasing in permeability as it becomes saturated with water to cut-down or cut-off the fuel flow, characterised by a hydrophobic and oleophilic layer disposed between the coalescing and absorptive layers, the hydrophobic/oleophilic layer (24) providing a substantially greater impedence to the flow of water droplets than to the flow of fuel.

2.    A fuel filter/dehydrator element as claimed in Claim 1, characterised further by a second coalescing layer (26) disposed between the hydrophobic/oleophilic layer (24) and the absorptive layer (28).

3.    A fuel filter dehydrator element as claimed in Claim 1 or 2 characterised further by a coalescing layer (32) downstream of the absorptive layer and a further absorptive layer (34) downstream of the further coalescing layer.

4.    A method of filtering and dehydrating fuel, including the steps of coalescing into droplets water in a flow of fuel, absorbing in an absorptive material the water droplets in the fuel, and resisting the flow of fuel as the absorptive material becomes saturated with water, characterised by the step of impeding the flow of water droplets to the absorptive material substantially more than the flow of fuel to absorptive material.

FUEL/WATER/
DIRT - IN

FUEL OUT

| | **DOCUMENTS CONSIDERED TO BE RELEVANT** | | EP 86302949.2 |
|---|---|---|---|
| Category | Citation of document with indication, where appropriate, of relevant passages | Relevant to claim | CLASSIFICATION OF THE APPLICATION (Int. Cl.4) |
| A | DE - B2 - 2 509 649 (IMPERIAL CHEMICAL INDUSTRIES LTD.)<br>* Claims; column 1, line 32 - column 3, line 52 *<br>-- | 1 | C 10 G 33/06<br>B 01 D 17/02 |
| A | FR - A - 1 561 804 (FILTERS INC.)<br>* Claims; page 1, line 1 - page 3, line 5 *<br>-- | 1 | |
| A | US - A - 4 011 175 (PREUS)<br>* Claims; column 2, line 20 - column 3, line 12 *<br>-- | 1 | |
| A | US - A - 3 583 904 (J.R.WINSTON et al.)<br>* Claims; column 2, line 10 - column 3, line 45 *<br>-- | 1,2 | **TECHNICAL FIELDS SEARCHED (Int. Cl.4)** |
| A | DE - A1 - 3 129 588 (VELCON FILTERS INC.)<br>* Claims *<br>---- | 1 | C 10 G 33/00<br>B 01 D 17/00<br>B 01 D 15/00<br>B 01 D 27/00<br>B 01 D 29/00 |

The present search report has been drawn up for all claims

| Place of search | Date of completion of the search | Examiner |
|---|---|---|
| VIENNA | 04-09-1986 | STÖCKLMAYER |